# EUROPÄISCHE PATENTANMELDUNG

(11) **EP 1 391 646 A2**
(43) Veröffentlichungstag der Anmeldung: **25.02.2004**
(21) Anmeldenummer: 03018833.8
(22) Anmeldetag: 19.08.2003
(51) Int. Cl.: F16K 27/02

(54) **Ventil**

(30) Priorität: 20.08.2002 DE 10238963
(71) Anmelder: HONEYWELL AG, 63067 Offenbach am Main (DE)
(72) Erfinder: Kottek, Günter, 44534 Lünen (DE); Gumpe, Volker, 59757 Arnsberg (DE)
(74) Vertreter: Fritz, Edmund Lothar, Dipl.-Chem.

(57) **Zusammenfassung**

Die Erfindung betrifft ein Ventil (1) für Flüssigkeiten zum Einbau in Leitungen, insbesondere Strangventil für Wasserversorgungseinrichtung, mit folgenden Merkmalen: das Ventil (1) weist ein Gehäuse (2) und ein Ventiloberteil (3) auf; das Gehäuse weist einen ersten Stutzen (4) zur Verbindung zur Leitung, einen zweiten Stutzen (5) zur Verbindung zur Leitung sowie einen dritten Stutzen (6) zur Aufnahme des Ventiloberteils (3) auf; das Ventil (1), insbesondere das Ventiloberteil (3), umfasst einen Ventilkegel (7); das Ventil (1), insbesondere das Gehäuse (2), umfasst einen Ventilsitz (8); der Ventilsitz (8) ist strömungstechnisch zwischen dem ersten Stutzen (4) und dem zweiten Stutzen (5) angeordnet und der Ventilsitz (8) wirkt zum Einstellen des Durchflusses mit dem Ventilkegel (7) zusammen; wobei das Ventil (1) in einem Bereich, der strömungstechnisch vor oder hinter dem Ventilsitz (8) angeordnet ist, einen oder mehrere weitere Stutzen (9, 10) zum Anschluss von Sensoren (3, 14), insbesondere zur Messung der Strömungsgeschwindigkeit nach dem kaloriemetrischen Messprinzip aufweist.

## Beschreibung

Die vorliegende Erfindung betrifft ein Ventil für Flüssigkeiten zum Einbau in Leitungen, insbesondere ein Strangventil für Wasserversorgungseinrichtungen. Das Ventil weist ein Gehäuse und ein Ventiloberteil auf. Das Gehäuse hat dabei einen ersten Stutzen zur Verbindung zur Leitung, einen zweiten Stutzen zur Verbindung zur Leitung, sowie einen dritten Stutzen zur Aufnahme des Ventiloberteils. Das Ventiloberteil umfasst einen Ventilkegel, welcher mit einem Ventilsitz in dem Gehäuse zum Einstellen des Durchflusses durch das Ventil zusammenwirkt. Der Ventilsitz ist dabei strömungstechnisch zwischen dem ersten und dem zweiten Stutzen angeordnet.

Ein derartiges Ventil ist aus der Druckschrift EP 0 946 910 B1 bekannt. Diese Druckschrift betrifft nämlich eine Strangregulierarmatur zur Einregulierung von Volumenströmen in Rohrleitungen, wobei mindestens ein in ein Strömungsgehäuse integrierter Sensor den Volumenstrom erfasst und mit einer Auswerteeinheit sowie einen die Durchflusskennlinie des jeweils zugeordneten Gehäuses enthaltenden Datenspeicher verbunden ist. Der Sensor arbeitet nach einem kalorimetrischen Messprinzip und ist fest und unlösbar in der Strangregulierarmatur eingebaut. Nachteil des festen Einbaus der Sensoren in die Strangregulierarmatur ist, dass die Sensoren, insbesondere bei Armaturen mit kleinerer Nennweite unverhältnismäßig teuer zur Gesamtarmatur sind. Ein weiterer Nachteil ist, dass der Sensor bei Verschmutzung nicht gereinigt werden kann.

Aus der Druckschrift GB 1 110 157, der Druckschrift EP 0 592 398 B1 und DE 196 1925 C2 sind Ventile zum Teil für Warmwasseranlagen zum Teil Strangreguliersysteme bekannt, welche Stutzen für das entnehmbaren Einsetzen von Sensoren aufweisen. Diese Stutzen sind jeweils vor und hinter einer Engstelle des Ventils angebracht, so dass die Sensoren mit ihren für die Messung wichtigen Elementen jeweils vor und hinter der Engstelle die Strömung, welche durch das Ventil geführt sind hineinragen. Bei der Engstelle kann es sich um eine besondere Blende handeln, wie beispielweise in der Druckschrift DE 196 1925 C2 offenbart, oder aber bei der Engstelle handelt es sich um den Ventilsitz des Ventils, wie es aus den anderen beiden Druckschriften bekannt ist. Die in den drei genannten Druckschriften offenbarten Ventile sind für eine Messung der Strömungsgeschwindigkeit bzw. des Durchflusses nach dem Differenzdruckmessprinzip vorbereitet. Drucksensoren können über die Stutzen in die Strömung gebracht werden um dem Druck vor und hinter der Engstelle zu erfassen. Aus der Druckdifferenz kann dann nach der Differnzdruckmethode die Strömungsgeschwindigkeit bzw. der Durchfluss durch das Ventil errechnet werden. Die in den 3 genannten Druckschriften offenbarten Ventile mit Stutzen für die Messung der Strömungsgeschwindigkeit und des Durchflusses nach der Differenzdruckmethode kommen für eine Messung der Strömungsgeschwindigkeit nach dem kalorimetrischen Messprinzip nicht in Frage. Zum einen ist es nicht möglich eine kalorimetrische Messung mittels Messstutzen durchzuführen, die vor und hinter einer Engstelle angebracht sind. Zum anderen sind die aus der Druckschrift EP 0 946 910 B1 bekannten Sensoren geometrisch so ausgebildet, dass sie nicht in die aus den drei Druckschriften bekannten Ventile mit Messstutzen eingesetzt werden können. Die Messstutzen, der Ventile, die aus den drei genannten Druckschriften bekannt sind, haben ein so geringen Querschnitt dass ein aus der Druckschrift EP 0 946 910 B1 bekannter Sensor nicht in diese Stutzen eingesetzt werden kann. Der enge Querschnitt bei den Stutzen, ist deshalb notwendig, da die Sensoren für die Messung der Strömungsgeschwindigkeiten nach der Differenzdruckmethode während des Betriebs der Anlage in die Stutzen einsetzbar und aus den Stutzen entnehmbar sein sollen. Diese macht es erforderlich, den Querschnitt der Stutzen möglichst klein zu halten, so dass beim einsetzen bzw. beim entnehmen der Sensoren möglichst keine Flüssigkeit über die Stutzen aus der Leitung austreten kann.

Es liegt daher der Erfindung die Aufgabe zugrunde, ein Ventil vorzuschlagen, bei welchem Sensoren zur Messung nach dem kalorimetrischen Messprinzip nicht fest eingesetzt sind, jedoch eine Messung nach dem kalorimetrischen Messprinzip über während des Betriebes einsetzbare und entnehmbare Sensoren möglich ist.

Diese Aufgabe wird erfindungsgemäß durch ein Ventil mit den Merkmalen gemäß Anspruch 1 gelöst. Bei diesem Ventil sind weitere Stutzen in einem Bereich, der strömungstechnisch vor oder hinter dem Ventilsitz angeordnet ist, vorgesehen, in welchem die Sensoren eingesetzt sind. Die Sensoren können so zum Messen in das Ventil eingesetzt werden; nach der beendeten Messung werden die Sensoren jedoch aus dem Ventil wieder entfernt, um zum Beispiel für Messungen an einem weiteren Ventil zur Verfügung zu stehen.

Vorzugsweise weist das Ventil zwei weitere Stutzen zum Anschluss der Sensoren auf.

Gemäß der Erfindung kann zumindest in einem der weiteren Stutzen ein Ring oder eine Manschette aus einem Elastomer angeordnet sein. Dieser Ring oder diese Manschette kann in axialer Richtung des Rings beziehungsweise der Manschette zusammengepresst sein. Dadurch wird der Ring beziehungsweise die Manschette verschlossen, wobei jedoch beim Einsetzen des Sensors in den weiteren Stutzen der Sensor durch den Ring oder die Manschette hindurchgeschoben wird, um in das Gehäuse eindringen zu können.

Ebenso kann in zumindest einem der weiteren Stutzen ein zumindest einfach axial gelochter Stopfen aus einem Elastomer eingesetzt sein, wobei das Loch des Stopfens bei nicht eingesetzten Sensoren verschlossen ist. Bei der Ausführung des weiteren Stutzens mit einem gelochten Stopfen wird der Sensor durch den gelochten Stopfen hindurchgeschoben, um dann im Gehäuse für die Messungen bereit zu stehen.

Die weiteren Stutzen können gemäß der Erfindung am ersten oder zweiten Stutzen angeordnet sein. Dabei können die weiteren Stutzen in axialer Richtung des ersten oder zweiten Stutzens hintereinanderliegend angeordnet sein. Ebenso ist es möglich, dass die weiteren Stutzen in Umfangsrichtung des ersten oder zweiten Stutzens nebeneinanderliegend angeordnet sind.

In die weiteren Stutzen können zwei Sensorlanzen eingesetzt sein oder eingesetzt werden. lm Bereich der Spitze der Sensorlanzen ist zumindest ein Temperatursensor eingesetzt. Ein Teil der Temperatursensoren muss, damit die Messungen nach dem kalorimetrischen Messprinzip durchgeführt werden können beheizt sein.

Die Temperatursensoren können im übrigen mit einer Einrichtung zur Signalverstärkung verbunden sein. Ebenso können die Temperatursensoren unmittelbar oder unter Zwischenschaltung der Einrichtung zur Signalverstärkung mit einem Berechnungsmittel verbunden sein. In dem Berechnungsmittel wird aus dem von den Temperatursensoren detektierten Temperaturen der Volumenstrom berechnet werden. Dieses kann auch unter Berechnung der Strömungsgeschwindigkeit in einem Zwischenschritt erfolgen.

Die Berechnungsmittel sind vorteilhaft mit einem Anzeigemittel verbunden, auf welchem dann der gemessene Wert des Volumenstroms, der Strömungsgeschwindigkeit oder der Temperaturen gemessen werden kann.

Die Berechnungsmittel und das Anzeigemittel aber unter Umständen auch die Einrichtung zur Signalverstärkung können in einem gemeinsamen Gehäuse angeordnet sein.

Gemäß der Erfindung kann das Berechnungsmittel auch an der Sensorlanze angebracht sein. Das Berechnungsmittel ist dann vorzugsweise an dem zu der Spitze entgegengesetzen, Ende der Sensorlanze angebracht. Das Berechnungsmittel kann dann ein Gehäuse umfassen welches an der Sensorlanze befestigt ist. Das Berechnugsmittel kann ferner elektrische Bauelemente umfassen, mit welchen die Berechnung durchgeführt wird. Die Bauelemente sind vorzugsweise auf einem Schaltungsträger des Berechnungsmittels angebracht. Bei einem Ventil mit einem solchen Berechnungsmittel, ist das Berechnungsmittel vorzugsweise außerhalb des weiteren Stutzens, während die Sensorlanze selbst durch den Stutzen geführt ist.

Eine Sensorlanze kann gemäß der Erfindung einen Durchmesser von bis zu 4 mm haben, so dass die Sensorlanze durch einen axial gelochten Stopfen hindurchgeführt werden kann, dessen Loch sich nach einer Entnahme der Sensorlanze im Entspannten Zustand wieder verschließt, um ein Austritt von Flüssigkeit aus dem Ventil zu verhindern.

Ein erfindungsgemäßer Sensor welcher für die Durchführung von Messungen nach dem kalorimetrischen Messprinzip an einem vorher genannten Ventil geeignet ist, weist eine Sensorlanze auf, die ein erstes Ende mit einer Spitze hat, in welcher zumindest zwei Temperatursensoren eingesetzt sind, von denen einer beheizt ist. Die Sensorlanze weist ferner ein zweites Ende auf, an dem ein Gehäuse angebracht ist in welchem elektrische Bauelemente angeordnet sind. Der Sensor weist ein Berechnungsmittel auf, welches das Gehäuse und die elektrischen Bauelement umfasst. Die Sensorlanze eines erfindungsgemäßen Sensors kann einen Durchmesser von bis zu 4 mm haben.

Verschiedene Ausführungsbeispiele für ein erfindungsgemäßes Ventil sind anhand der Zeichnung näher beschrieben. Darin zeigt
- Fig. 1: ein Ventil mit zwei weiteren Stutzen,
- Fig. 2: ein Ventil mit einem Stutzen für zwei Sensorlanzen,
- Fig. 3, 3a: ein Ventil mit einem Stutzen für eine Sensorlanze,
- Fig. 4: einen Stutzen für eine Sensorlanze mit einem Kugelhahn zum Absperren des weiteren Stutzens und
- Fig. 5, 5a: ein Ventil mit zwei in Umfangsrichtung hintereinanderliegenden Stutzen.

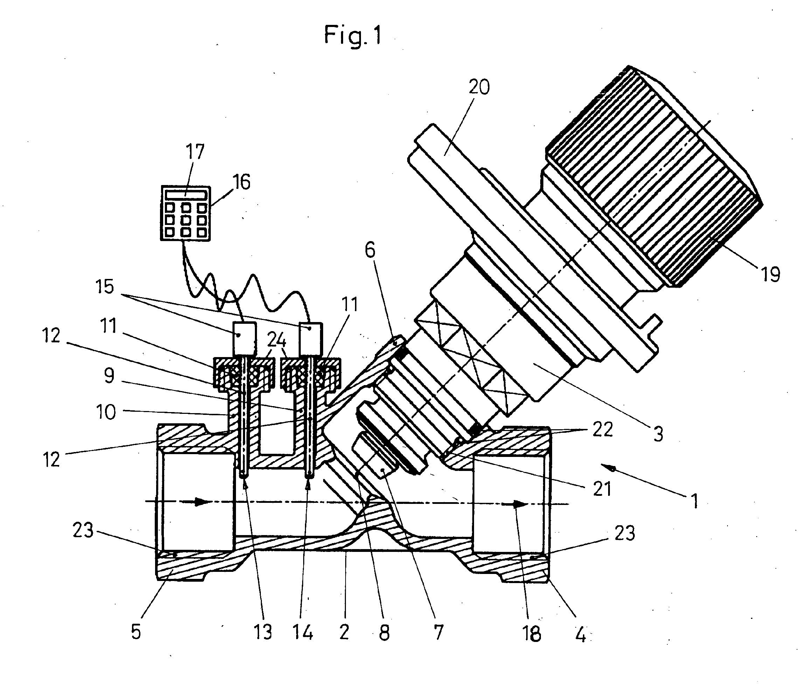

Die in den Figuren 1 bis 6 dargestellten Ventile weisen große Ähnlichkeiten auf. Daher sind übereinstimmende Merkmale des Ventils mit gleichen Bezugszeichen versehen.

Die Ventile 1 gemäß der Figuren 1 bis 6 weisen ein Gehäuse 2 und ein Ventiloberteil 3 auf. Das Gehäuse umfasst einen ersten Stutzen 4 und einen zweiten Stutzen 5. Über diese Stutzen 4, 5 kann das Ventil 1 in eine Leitung eingeschaltet werden. Dazu sind auf der Innenseite der Stutzen 4, 5 Gewinde 23 vorgesehen. Das Gehäuse 2 umfasst ferner einen dritten Stutzen 6 für den Anschluss des Ventiloberteils 3. Auch der dritte Stutzen 6 weist ein Innengewinde 21 auf in welches das Ventiloberteil 2 unter Zwischenschaltung von Dichtungen 22 eingeschraubt ist.

In dem Ventiloberteil 3 ist eine nicht dargestellte Ventilspindel angeordnet, deren oberes Ende mit einem Handrad 19 verbunden ist. Über das Handrad 19 ist die Ventilspindel innerhalb des übrigen Ventiloberteils axial verschiebbar. Die Stellung der Ventilspindel kann über eine nicht dargestellte Ziffernscheibe, die mit dem Handrad 19 verbunden ist in einem Sichtfenster 20 angezeigt werden. Am unteren Ende der Ventilspindel ist ein Ventilkegel 7 vorgesehen. Dieser Ventilkegel 7 greift bei einem geschlossenen Ventil in einen Ventilsitz 8 ein. Dieser Ventilsitz 8 ist strömungstechnisch zwischen dem ersten und dem zweiten Stutzen angeordnet. Im geschlossenen Zustand des Ventils 1 verschließt der Ventilkegel die Durchtrittsöffnung des Ventilsitzes 8 und liegt an dem Ventilsitz 8 an. Damit ist der Volumenstrom von dem stromaufseitigen Stutzen 5 zu dem stomabseitigen Stutzen 4 unterbrochen. Die Strömungsrichtung ist im übrigen durch den Pfeil 18 angezeigt.

Die Ausgestaltung des Ventiloberteils 3 mit der Ventilspindel und dem Ventilkegel 7 und des Ventilsitzes 8 sind bei allen in den Figuren 1 bis 6 dargestellten Ventilen 1 gleich. Die in den Figuren 1 bis 6 dargestellten Ventile unterscheiden sich jedoch in der Anordnung von weiteren Stutzen 9, 10, welche der Aufnahme von Sensorlanzen 13, 14 zum Erfassen der Strömungsgeschwindigkeit nach dem kalorimetrischen Messprinzip dienen.

Das in Figur 1 dargestellte Ausführungsbeispiel für ein erfindungsgemäßes Ventil 1 weist für die Aufnahme von Sensorlanzen 12 zwei weitere Stutzen 9, 10 auf. Die weiteren Stutzen 9, 10 weisen dazu Durchtrittskanäle auf, die einen inneren Querschnitt haben, der dem äußeren Querschnitt der Sensorlanzen 12 im Wesentlichen entspricht. Am oberen Ende ist oberhalb der Kanäle ein Stopfen 11 in die Stutzen 9, 10 eingesetzt. Diese Stopfen 11 aus einem Elastomer haben ein sich axial erstreckendes zentrisches Loch, durch welches die Sensorlanzen 12 eingesteckt sind. Die Stopfen 11 der Stutzen 9, 10 sind über Überwurfmutter 24 an dem Stutzen 9, 10 befestigt. Die Sensorlanzen 12 sind von außen durch zentrische Löcher in den Überwurfmuttern 24 in den Stopfen 11 und den sich an den Stopfen 11 anschließenden Kanal eingeschoben und ragen mit ihrem unteren Ende aus den Stutzen 9, 10 heraus und in den Raum vor dem Ventilsitz 8 hinein.

An den unteren Enden, nämlich den in den Raum vor dem Ventilsitz 8 hineinragenden Enden der Sensorlanzen 12 ist jeweils ein Sensor 13, 14 angebracht. Einer der beiden Sensoren, nämlich der Sensor 14 ist beheizt. Über die Sensorlanzen 12 werden die Sensorsignale an Einrichtung zur Signalverstärkung 15 gegeben, welche am oberen Ende der Sensorlanzen 12 angebracht sind. Diese sind über Kabel mit in einem Gehäuse 16 angeordneten Berechnungsmitteln angeschlossen, wobei das Gehäuse 16 als Bediengerät ausgeführt ist und daher einen Tastatur und ein Anzeigemittel 17 aufweist.

Zur Berechnung des Volumenstroms, der durch das Ventil strömenden Flüssigkeit wird mittels des kalorimetrischen Messprinzips die Strömungsgeschwindigkeit in dem Raum vor dem Gehäuseventilsitz bestimmt. In dem Handgerät mit dem Gehäuse 16 wird dann aus der Strömungsgeschwindigkeit der Volumenstrom für die dem Ventil 1 zugeordnete Nennweite bestimmt. Dieser Volumenstrom kann dann in dem Anzeigemittel 17 abgelesen werden.

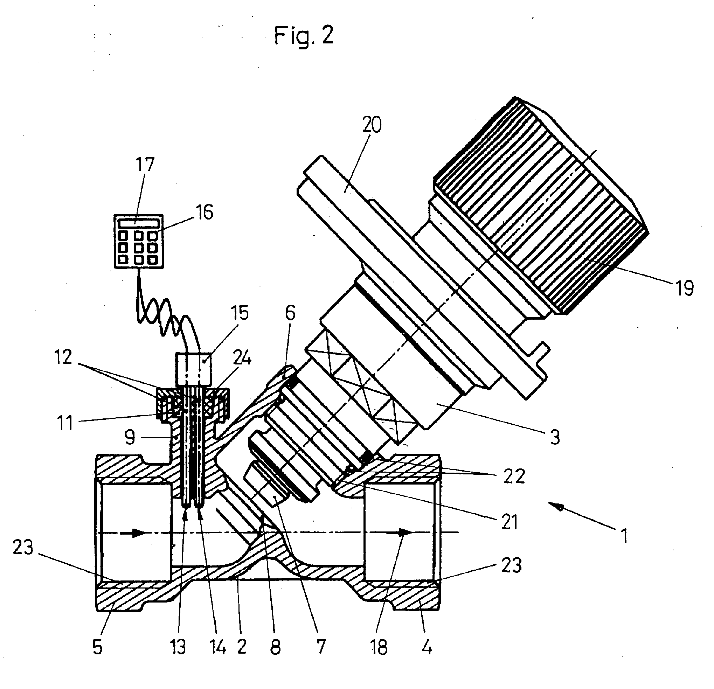

Das in Figur 2 dargestellte Ausführungsbeispiel für ein erfindungemäßes Ventil weist im Gegensatz zu dem in Figur 1 dargestellten Ausführungsbeispiel lediglich einen weiteren Stutzen 9 auf. Dieser Stutzen 9 enthält dagegen einen Kanal, in welchem zwei Sensorlanzen 12 eingeführt sind, wobei die unteren Enden der Sensorlanzen 12 in den Bereich vor dem Ventilsitz 8 des Gehäuses 2 hineinragen. An den unteren Enden der Sensorlanzen 12 sind Sensoren 13, 14 vorgesehen, von denen der Sensor 14 beheizt ist, um gemäß dem kalorimetrischen Messprinzip die Strömungsgeschwindigkeit in dem Gehäuse 2 messen zu können. Der Kanal, welcher die Sensorlanzen 12 aufnimmt, mündet in einem Bereich des Stutzens 9, in welchem ein Stopfen 11 eingesetzt ist, welcher zwei sich axial erstreckende Löcher aufweist, durch welche die Sensorlanzen 12 hindurch gesteckt sind. Der Stopfen 11 wird durch eine Überwurfmutter 24 gesichert. Am oberen Ende der Sensorlanzen 12 ist eine Einrichtung zur Signalverstärkung 15 aufgesetzt, welche über Signalleitungen mit einem Berechnungsmittel in einem Gehäuse 16 verbunden ist. Das Gehäuse 16 ist wie bei dem Ausführungsbeispiel gemäß Figur 1 als Handgerät ausgeführt.

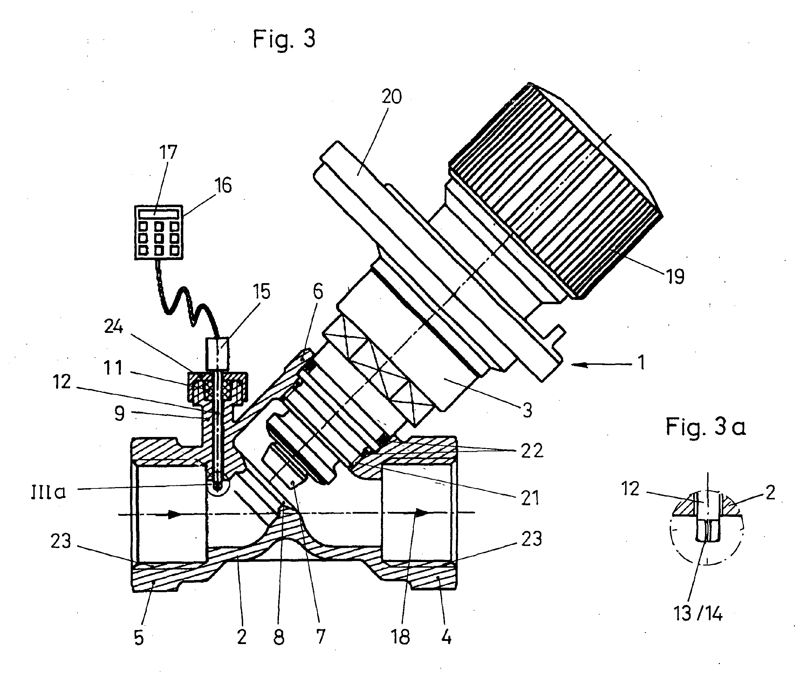

Auch das in Figur 3 dargestellte Ausführungsbeispiel für ein erfindungsgemäßes Ventil 1 weist wie das in Figur 2 dargestellte Ausführungsbeispiel lediglich einen weiteren Stutzen 9 auf. Dieser Stutzen 9 enthält wie das in Figur 2 dargestellte Ausführungsbeispiel einen Kanal. Der Kanal mündet nach unten in den Bereich vor dem Ventilsitz 8 und im oberen Bereich in einen aufgeweiteten Raum, in dem Stutzen 9, welcher von einem Stutzen 11 ausgefüllt ist. Der Stopfen 11 weist ein zentrisches Loch auf, und der Stopfen 11 ist durch eine Überwurfmutter 24 gesichert. Die Überwurfmutter 24 weist ebenfalls in Verlängerung des Kanals eine Ausnehmung auf. Durch die Ausnehmung der Überwurfmutter, dem axialen, Loch in dem Stopfen 11 und dem Kanal in dem Stutzen 9 ist eine Sensorlanze 12 eingeführt. Diese Sensorlanze 12 ragt mit ihrem unteren Ende in den Bereich vor dem Ventilsitz 8 hinein. Am unteren Ende der Sensorlanze 12 sind zwei Sensoren 13, 14 vorgesehen, von denen der Sensor 14 beheizt ist, um die Strömungsgeschwindigkeit nach dem kalorimetrischen Messprinzip messen zu können. Am oberen Ende der Sensorlanze 12 ist eine Einrichtung zur Signalverstärkung 15 vorgesehen, welche über Signalleitungen mit einem Gehäuse 16 verbunden ist, welches wie das Gehäuse der Ausführungsbeispiele gemäß der Figuren 1 und 2 als Handgerät ausgeführt ist.

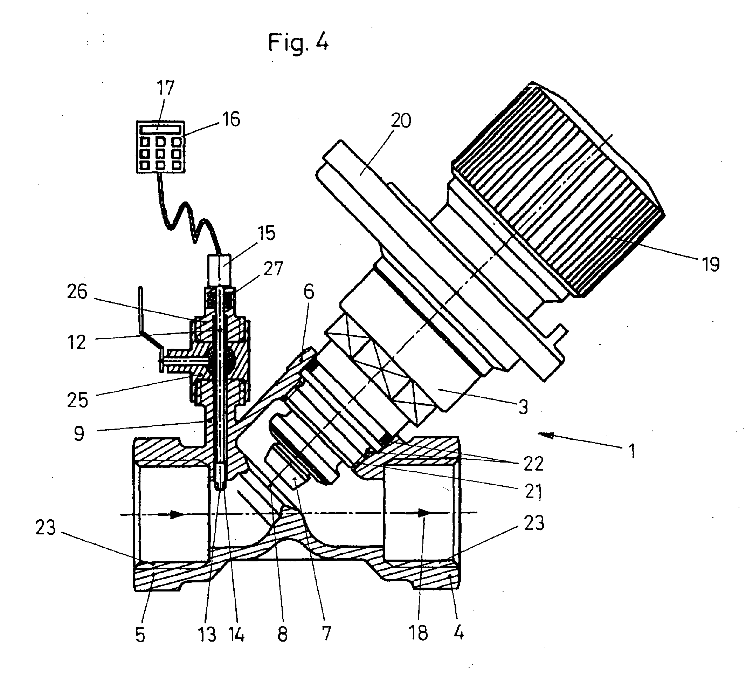

Das in Figur 4 dargestellte Ausführungsbeispiel für ein erfindungsgemäßes Ventil ist ähnlich dem in Figur 3 dargestellten Ausführungsbeispiel ausgeführt. Auch hier ist ein weiterer Stutzen 9 vorgesehen, in welchem ein Kanal vorgesehen ist. Durch diesen Kanal ist eine Sensorlanze 12 eingeschoben, welche an ihrem unteren in den Bereich vor dem Ventilsitz 8 hineinragenden Ende zwei Sensoren 13, 14 aufweist, von denen der Sensor 14 beheizbar ist, um gemäß dem kalorimetrischen Messprinzip die Strömungsgeschwindigkeit der durch das Ventil einströmenden Flüssigkeit erfassen zu können. Auf den Stutzen 9 ist jedoch im Unterschied zu dem in Figur 3 dargestellten Ausführungsbeispiel bei dem in Figur 4 dargestellten Ausführungsbeispiel ein Kugelhahn 25 aufgeschraubt. Auf diesen Kugelhahn 25 ist dann ferner ein ergänzender Stutzen 26 aufgeschraubt. ln diesem ist eine Dichtung 27 vorgesehen. Sowohl der ergänzende Stutzen 26, die darin eingesetzte Dichtung 27, als auch der Kugelhahn 25 in seinem geöffneten Zustand verlängern dem in dem Stutzen 9 vorgesehenen Kanal nach oben. Durch ein Schließen des Kugelhahns 25 wird der von dem weiteren Stutzen 9 in den ergänzenden Stutzen 26 fortgeführte Kanal unterbrochen. lm geöffneten Zustand des Kugelhahns 25 kann dagegen eine Sensorlanze 12 durch den ergänzenden Stutzen 26 mit der darin angeordneten Dichtung 27, dem Kugelhahn 25 und dem weiteren Stutzen 9 eingeschoben werden, wobei das untere Ende der Sensorlanze 12 in den Bereich vor dem Ventilsitz 8 des Gehäuses 2 hineinragt. An dem unteren Ende sind dann wie schon beschrieben, zwei Sensoren 13, 14 vorgesehen. Am oberen Ende der Sensorlanze ist wie bei dem Ausführungsbeispiel in Figur 3 eine Einrichtung zur Signalverstärkung 15 vorgesehen, an welche dann das aus den vorhergehenden Ausführungsbeispielen bekannte Gehäuse 16 mit Berechnungsmitteln und anderen angeschlossen ist.

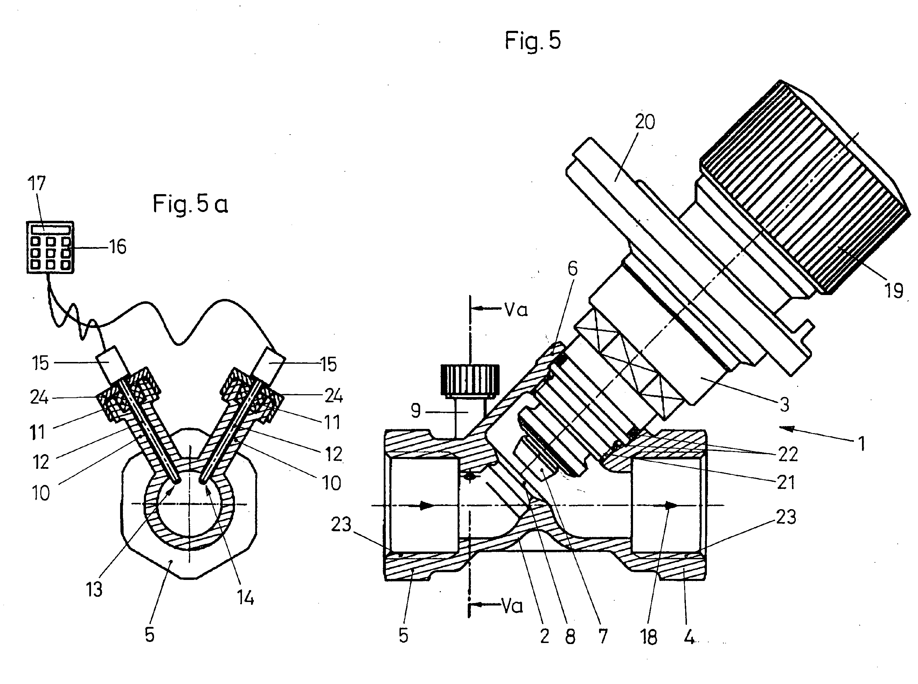

Das in Figur 5 dargestellte Ausführungsbeispiel für ein erfindungsgemäßes Ventil 1 entspricht am ehesten dem in Figur 1 dargestellten Ausführungsbeispiel. Die beiden Ausführungsbeispiele gemäß Figur 1 und gemäß Figur 5 unterscheiden sich lediglich durch die Anordnung der weiteren Stutzen 9, 10. Während die weiteren Stutzen bei dem Ausführungsbeispiel gemäß Figur 1 in axialer Richtung des Gehäuses 2 auf dem zweiten Stutzen 5 angeordnet sind, sind die weiteren Stutzen 9, 10 wie aus Figur 5a unmittelbar ersichtlich ist in Umfangsrichtung des zweiten Stutzens 5 nebeneinanderliegend angeordnet.

## Patentansprüche

1. Ventil (1) für Flüssigkeiten zum Einbau in Leitungen, insbesondere Strangventil für Wasserversorgungseinrichtung, mit folgenden Merkmalen:
- das Ventil (1 ) weist ein Gehäuse (2) und ein Ventiloberteil (3) auf;
- das Gehäuse weist einen ersten Stutzen (4) zur Verbindung zur Leitung, einen zweiten Stutzen (5) zur Verbindung zur Leitung sowie einen dritten Stutzen (6) zur Aufnahme des Ventiloberteils (3) auf;
- das Ventil (1 ), insbesondere das Ventiloberteil (3), umfasst einen Ventilkegel (7);
- das Ventil (1), insbesondere das Gehäuse (2), umfasst einen Ventilsitz (8);
- der Ventilsitz (8) ist strömungstechnisch zwischen dem ersten Stutzen (4) und dem zweiten Stutzen (5) angeordnet und der Ventilsitz (8) wirkt zum Einstellen des Durchflusses mit dem Ventilkegel (7) zusammen;
**dadurch gekennzeichnet, dass** das Ventil (1) in einem Bereich, der strömungstechnisch vor oder hinter dem Ventilsitz (8) angeordnet ist, einen oder mehrere weitere Stutzen (9, 10) zum Anschluss von Sensoren (3, 14), zur Messung der Strömungsgeschwindigkeit nach dem kalorimetrischen Messprinzip aufweist, welche zur Messung der Strömungsgeschwindigkeit in das Ventil einsetzbar sind.

2. Ventil nach dem vorhergehenden Anspruch, **dadurch gekennzeichnet, dass** das Ventil (1 ) genau einen weiteren Stutzen (9, 10) zum Anschluss von Sensoren aufweist.

3. Ventil nach einem der vorhergehenden Ansprüche, **dadurch gekennzeichnet, dass** in zumindest einem der weiteren Stutzen (9, 10) ein Ring oder eine Manschette aus einem Elastomer angeordnet ist.

4. Ventil nach dem vorhergehenden Anspruch, **dadurch gekennzeichnet, dass** der Ring oder die Manschette in axialer/radialer Richtung des Rings beziehungsweise der Manschette eingespannt ist.

5. Ventil nach einem der vorhergehenden Ansprüche, **dadurch gekennzeichnet, dass** in zumindest einem der weiteren Stutzen (9, 10) ein zumindest einfach axial gelochter Stopfen (11) aus einem Elastomer eingesetzt ist, wobei das Loch/des Stopfen im entspannten Zustand verschlossen ist.

6. Ventil nach einem der vorhergehenden Ansprüche, **dadurch gekennzeichnet, dass** die weiteren Stutzen (9, 10) am ersten oder zweiten Stutzen (4, 5) angeordnet sind.

7. Ventil nach dem vorhergehenden Anspruch, **dadurch gekennzeichnet, dass** die weiteren Stutzen (9, 10) in axialer Richtung des ersten oder zweiten Stutzens (4, 5) hintereinanderliegend angeordnet sind.

8. Ventil nach Anspruch 6, **dadurch gekennzeichnet, dass** die weiteren Stutzen (9, 10) in Umfangsrichtung des ersten oder zweiten Stutzens (4, 5) nebeneinanderliegend angeordnet sind.

9. Ventil nach einem der vorhergehenden Ansprüche, **dadurch gekennzeichnet, dass** in den weiteren Stutzen (4, 5) eine oder zwei Sensorlanzen (12) oder Sensornadeln entnehmbar eingesetzt sind.

10. Ventil nach einem der vorhergehenden Ansprüche, **dadurch gekennzeichnet, dass** im Bereich der Spitze der Sensorlanzen (12) zumindest ein Temperatursensor (13, 14) eingesetzt ist.

11. Ventil nach dem vorhergehenden Anspruch, **dadurch gekennzeichnet, dass** ein Teil der Temperatursensoren (13, 14) beheizt ist.

12. Ventil nach dem Anspruch 10 oder 11, **dadurch gekennzeichnet, dass** die Temperatursensoren (13, 14) mit einer Einrichtung (15) zur Signalverstärkung verbunden sind.

13. Ventil nach einem der Ansprüche 10 bis 12, **dadurch gekennzeichnet, dass** die Temperatursensoren (13, 14) mit einem Berechnungsmittel verbunden sind.

14. Verfahren nach dem vorhergehenden Anspruch, **dadurch gekennzeichnet, dass** das Berechnungsmittel mit einem Anzeigemittel (17) verbunden ist.

15. Ventil nach Anspruch 13 und 14, **dadurch gekennzeichnet, dass** das Berechnungsmittel und das Anzeigemittel (17) und vorteilhaft die Einrichtung zur Signalverstärkung in einem Gehäuse (16) angeordnet sind.

16. Ventil nach Anspruch 13 oder 14 , **dadurch gekennzeichnet, dass** das Berechnungsmittel an der Sensorlanze angebracht ist.

17. Ventil nach Anspruch 16, **dadurch gekennzeichnet, dass** das Berechnungsmittel an dem zu der Spitze entgegengesetzten Ende der Sensorlanze angebracht ist.

18. Ventil nach Anspruch 16 oder 17, **dadurch gekennzeichnet, dass** das Berechnungsmittel ein Gehäuse umfasst, welches an der Sensorlanze (12) befestigt ist.

19. Ventil nach einem der Ansprüche 13 bis 18, **dadurch gekennzeichnet, dass** das Berechnungsmittel elektronische Bauelemente umfasst.

20. Ventil nach Anspruch 19, **dadurch gekennzeichnet, dass** die Bauelemente auf einem Schaltungsträger des Berechnungsmittels angeordnet sind.

21. Ventil nach einem der Ansprüche 16 bis 20, **dadurch gekennzeichnet, dass** das Berechnungsmittel, außerhalb der Lanze liegt.

22. Ventil nach einem der Ansprüche 9 bis 21, **dadurch gekennzeichnet, dass** die Sensorlanze (12) einen Durchmesser von ca. 4 mm hat.

23. Sensor zur Messung der Strömungsgeschwindigkeit nach dem kalorimetrischen Messprinzip mit folgenden Merkmalen:
- die Sensorlanze weist eine Sensorlanze auf;
- die Sensorlanze (12) weist ein erstes Ende mit einer Spitze auf, in welcher zumindest zwei Temperatursensoren (13, 14) eingesetzt sind, von denen einer beheizt ist;
- die Sensorlanze weist ein zweites Ende auf, an dem ein Gehäuse angebracht ist;
- in dem Gehäuse sind elektrische Bauelemente angeordnet;
- der Sensor weist ein Berechnungsmittel auf, welches das Gehäuse und die elektrischen Bauelemente umfasst.

24. Sensor nach Anspruch 23, **dadurch gekennzeichnet, dass** die Sensorlanze einen Durchmesser von ca. 4 mm hat.
